# EUROPEAN PATENT APPLICATION

(11) **EP 2 060 845 A1**
(43) Date of publication of application: **20.05.2009**
(21) Application number: 09003044.6
(22) Date of filing: 10.06.2005
(51) Int. Cl.: F16M 11/06, F16M 11/04, F16M 11/08

(54) **Device support arm**

(30) Priority: 10.06.2004 US 578546 P
(62) Divisional of application: 05760459.7
(71) Applicant: Humanscale Corporation, New York NY 10010 (US)
(72) Inventor: Saez, Manuel, Brooklyn, NY 11237-2312 (US)
(74) Representative: Price, Nigel John King

(57) **Abstract**

Device support arm comprising a horizontal arm (510); a parallelogram arm (520) comprising a lower arm bar (530), an upper arm bar (533) comprising an upper surface and two opposing side surfaces, a front parallelogram pivot bracket (522), a rear parallelogram pivot bracket (524), and a gas spring (535) attached at one end to the lower arm bar and attached at the other end to the upper surface of the upper arm bar; a dual pivot attachment (515) connecting the horizontal arm (510) to the parallelogram arm (520), said dual pivot attachment (510) comprising a front pivot (517) and a rear pivot (519), both pivoting the same plane; a device attachment bracket (425) attached to the horizontal arm (510); and a support attachment bracket (540) attached to the parallelogram arm (520).

## Description

### FIELD OF THE INVENTION

The present invention is generally directed to mechanisms useful for facilitating positional adjustment of an attached device. More particularly, the invention provides a height adjustment mechanism for use with an input device or a display device, such a video display. The mechanism allows for easy vertical adjustment of a device, placing the device in a position more ergonomically desirable for a user. The mechanism can further include components, such as a monitor arm, for facilitating horizontal adjustment of a device.

### BACKGROUND

With the technological innovation of the last 15 years, more and more individuals are spending an increasing amount of time using computers. Accordingly, computer users are spending an increasing amount of time sitting in front of a video display unit. This time encompasses activities including inputting data, viewing video display, and otherwise interacting with digital media.

The increasing amount of time associated with such activity has also been associated with various health problems, particularly stemming from improper posture. These problems include muscle strain, fatigue, and stress. According to experts in ergonomics, though, there are several easy and effective ways in which computer users can improve their physical comfort, fight fatigue, and reduce the risk of injuries from repetitive motions.

Posture is one area in which minor adjustments can quickly yield benefits. Even at home, but especially in a more stressful environment, like an office, users may force their bodies into rigid positions that result in fatigue, muscle strain, and, potentially, injury. Maintaining what experts refer to as optimal ergonomic positioning can increase energy levels and improve overall comfort, although it may take a few weeks before the results are noticeable. Good posture keeps the spine in what health professionals call the neutral position. Achieving a neutral posture while seated upright in a chair with good lumbar support entails lifting the rib cage away from the hips, tucking in the belly, pulling the shoulders back, centering the weight of the head atop the spine, and maintaining the lower back in a gentle C-shaped curve. Sustaining this position can help reduce muscle strain and relieve pressure on the lower back.

Beyond spinal posture, optimal ergonomic positioning requires tailoring the work area to fit the user's needs. Among things necessary to accomplish that is to position a video display being used at an appropriate eye level. Having the video display substantially at eye-level reduces muscle strain caused by the weight of the head leaning too far backward or forward.

The prior art discloses multiple methods for adjusting the position of a video display. Generally, positional changes are referred to in view of three adjustments: 1) vertical adjustment (i.e. adjusting the height of the display); 2) horizontal adjustment (i.e. adjusting the side-to-side position); and 3) tilt adjustment (i.e. adjusting the degree to which the display is tilted from the horizontal). In some cases, the prior art has attempted to supply a mechanism for all three positional adjustments. For example, U.S. Patent No. 6,149,253 discloses a system comprising a display platform supported on a frame with a lift actuator, the display platform having a swivel base, a swivel actuator, a tilt actuator, and a display table. Systems such as this, while functional, are inefficient and bulky. Further, such systems are limited to use with larger displays, such as conventional computer monitors and conventional CRT television sets.

The present state of the art in video display has an emphasis on flat screen designs. This conforms to the market demand for higher performance, less space consumption, and a more streamlined appearance. To meet this demand, it is becoming common to have flat screen video displays attached to a work area with some manner of display arm. These display arms may be non-movable providing only a single viewing position. In such situations, vertical adjustment of the display requires detaching the display arm and physically raising or lowering the point of attachment to the work area. In other embodiments, display arms may be hinged providing for horizontal movement of the attached video display. Again, however, vertical adjustment is not possible without physically detaching the display arm and raising or lowering the point of attachment to the work area.

So-called "high tech" work areas demand flexibility for accommodating various users. Furthermore, the daily needs of individual users can also change. To be ergonomically beneficial, a video display should be capable of vertical adjustment to a most comfortable position.

Accordingly, it would be advantageous to have a mechanism allowing easy adjustment of the vertical position of a video display, such as a flat screen computer monitor. Such height adjustment mechanism should be capable of being mounted directly to a work station. Further, such height adjustment mechanism should be capable of being mounted in conjunction with a display arm or other mechanism allowing for further positional adjustment. Additionally, such height adjustment mechanism should be capable of use with a large variety of video displays or input devices without requiring additional attachment adapters.

### SUMMARY OF THE INVENTION

The present invention provides a positional adjustment mechanism that allow for easy adjustment of the position of a video display, such as a flat screen computer monitor, or an input device, such as a touchscreen. The positional adjustment mechanism provides height adjustment, lateral adjustment, and depth adjustment of the attached device. The mechanism can be a single mechanism or can be a combination of two or more mechanisms.

In one aspect, the invention is a front end height adjustment mechanism (FEA mechanism). In one particular embodiment, the FEA comprises a track, a sliding bracket adapted for vertical movement along the track, track friction reducers attached to the sliding bracket, a second bracket attached to the track and adaptable for mounting a device to the mechanism or attaching the mechanism to a support, and a compression gas spring.

According to another embodiment of the invention, the height adjustment mechanism comprises a track, a sliding bracket, at least one additional bracket adaptable for mounting a device to the mechanism or attaching the mechanism to a support, and a motion regulating device. An additional bracket can be connected to the track assembly or the sliding bracket. In one particular embodiment of the mechanism, a display or input device is attachable to the track assembly (or the sliding bracket), preferentially with a display attachment bracket. Further, according to one embodiment of the invention, the sliding bracket (or the track assembly) is capable of attachment to an external support, such as a display arm. In one preferred embodiment, the motion regulating device is a compression gas spring mounted in the track assembly and attached to the sliding bracket.

The FEA of the invention combines simplicity of design with a high level of effectiveness to provide a mechanism that allows for easy height adjustment of attached devices. In particular, the track assembly is preferentially comprised of an aluminum extrusion profile. Accordingly, the mechanism can be easily modified to accommodate video displays, or other devices, of differing sizes. Similarly, gas springs are readily available and can be provided in a different weight and/or a different stroke to accommodate devices of greater or lesser weight. Given the ease of modification, the front end height adjustment mechanism can be readily produced in different forms to be immediately adaptable to specific styles or models of video displays.

The present invention is a further improvement over the prior art in the ease of adjustment it provides. Preferentially, the gas spring used in the mechanism is of a weight that is substantially close to the force needed to move the weight of the attached device. Accordingly, there is less leverage encountered in the movement of the display. Furthermore, there is less friction between the external support bracket and the track apparatus. In one embodiment, such friction reduction is facilitated by the inclusion of glides, which act as friction reducers between the track apparatus and the external support bracket. Additionally, commercial lubricants can be used with the track to further reduce friction.

The present invention is also easily accommodated in most work and personal environments. The front end height adjustment mechanism is light in weight, sleek in appearance, and VESA^{®} compliant. VESA^{®} is a Flat Panel Monitor Physical Mounting Interface Standard (FPMPMI^{™}) defining a standardized hole pattern. Manufacturers include this hole pattern on the back of their displays for mounting purposes. Typically, a VESA^{®} hole pattern for displays under 23" diagonal is sized either 75 mm x 75 mm or 100 mm x 100 mm. Being VESA^{®} compliant, the front end height adjustment mechanism is readily adaptable to most flat-screen video displays generally available on the market.

According to another aspect of the invention, there is provided a method for positionally adjusting a display or input device. In one embodiment, the method comprises the steps of: providing a front end height adjustment mechanism comprising a track, a sliding bracket, at least one additional bracket adaptable for mounting a device to the mechanism or attaching the mechanism to a support and a motion regulating device; attaching the front end height adjustment mechanism to a support; attaching a display or input device to the front end height adjustment mechanism; and manually adjusting the position of the display or input device.

In another aspect of the invention, there is provided a device support arm. In one particular embodiment, the device support arm comprises a horizontal arm, a parallelogram arm, a dual pivot attachment connecting the horizontal arm to the parallelogram arm, a device attachment bracket, and a support attachment bracket.

The device support arm according to this embodiment is particularly beneficial in that the dual pivot attachment allows for 180° lateral movement of the horizontal arm to either side of the support arm. More particularly, the support arm is capable of folding at the dual pivot attachment such that the horizontal arm is positioned adjacent the parallelogram arm. Preferentially, the parallelogram arm portion of the device support arm includes a motion regulating device, such as a gas spring.

In another embodiment of the invention, the device support arm comprises a front arm link, a rear arm, an offset pivot attachment connecting the front arm link to the rear arm link, a device attachment bracket, and a support attachment bracket. In one preferred embodiment, the rear arm link is greater in length that the front arm link.

In this embodiment, the device support arm is again particularly beneficial in that the support arm is capable of folding at the offset pivot attachment such that the front arm link is positioned adjacent the rear arm link. The device support arm further preferentially includes a mechanism for locking the support arm into an extended position.

According to another aspect, the invention comprises a knobless bracket particularly useful in connection with a post for providing adjustable support of a device support arm on the post. In one particular embodiment, the bracket comprises a compressible ring-shaped cover having a central opening therethrough and a spring component contained within the ring-shaped cover. Preferably, the spring provides a gripping force toward the central opening in the ring shaped cover, and compression of the ring-shaped cover releases the gripping force of the spring. In another particular embodiment of the invention, there is provided a post for supporting a device support arm, and the post includes a bracket according to the above description.

The invention is further an improvement in the field in that positional adjustment can be maximized through various combinations of positional adjustment mechanisms working together in an ergonomically desirable manner. Accordingly, the invention further encompasses various combinations of a display arm, the FEA, or further components, such as a mounting post and a knobless mounting bracket.

### BRIEF DESCRIPTION OF THE DRAWINGS

Figure 1 is a partially exploded front perspective view of one embodiment of a front end height adjustment mechanism of the invention;
Figure 2 is a partially exploded rear perspective view of one embodiment of a front end height adjustment mechanism of the invention;
Figure 3 is a perspective view of one embodiment of a slide bracket for use in a front end height adjustment mechanism of the invention;
Figure 4 is a partially exploded top view of a front end height adjustment mechanism according to one embodiment of the invention;
Figure 5 is a partially exploded top rear perspective view of one embodiment of a front end height adjustment mechanism according to the invention;
Figure 6 is a partially exploded rear perspective view of a front end height adjustment mechanism according to another embodiment of the invention;
Figure 7a is a rear perspective view of one embodiment of the front end height adjustment of the invention with the gas spring retracted and the sliding bracket in an up position;
Figure 7b is the same view provided in Figure 7a but with the gas spring extended and the sliding bracket in a down position;
Figure 8 is a perspective view of one embodiment of a device support arm on a post useful for supporting the FEA of the invention;
Figures 8a-8l are various different embodiments of the device support arm illustrated in Figure 8;
Figure 9 is a perspective view of one embodiment of a device support arm according to the invention;
Figure 9b is a top view of the device support arm of the embodiment of Figure 9, wherein the arm is fully extended;
Figure 9c is a perspective view of the device support arm of the embodiment of Figure 9, wherein the arm is fully folded;
Figure 10 is a side view of another embodiment of a device support arm according to the invention;
Figure 10b is a detail view of the dual pivot attachment according to one embodiment of the device support arm of the invention;
Figure 11 is a partially exploded perspective view of the embodiment of the device support arm according to Figure 10;
Figure 12 is a partially exploded detailed view of one embodiment of a device support arm of the invention illustrating the linkage between the parallelogram arm and the horizontal arm;
Figure 13 is a partially exploded detailed view of one embodiment of a device support arm of the invention illustrating the linkage between the parallelogram arm and the support attachment bracket;
Figure 14 is a perspective view of device support arm attached to a post an maintained in position on the post by a knobless bracket according to one embodiment of the invention;
Figure 15a is a top perspective view of one embodiment of the knobless bracket of the invention; and

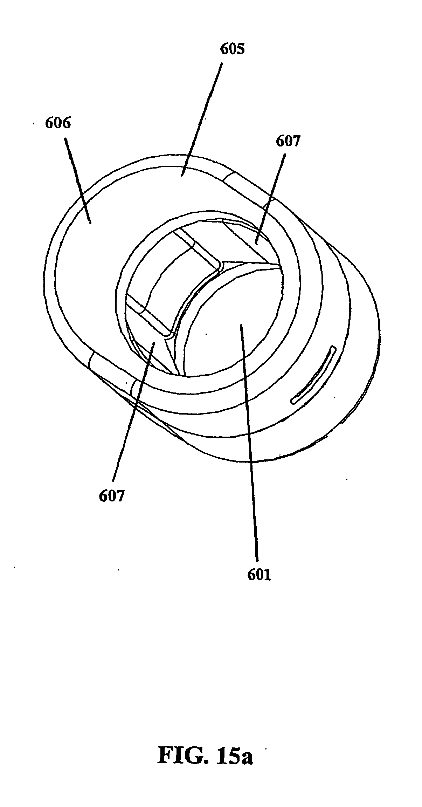

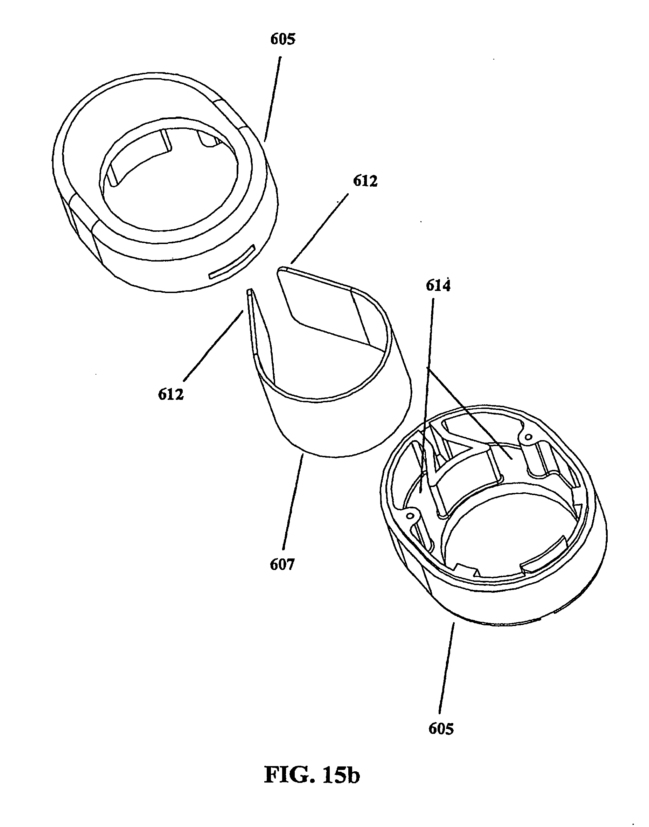

Figure 15 b is an exploded view of the embodiment of the knobless bracket shown in Figure 15a.

### DETAILED DESCRIPTION OF THE INVENTION

The present invention now will be described more fully hereinafter with reference to the accompanying drawings, in which preferred embodiments of the invention are shown. This invention may, however, be embodied in many different forms and should no be construed as limited to the embodiments set forth herein; rather, these embodiments are provided so that this disclosure will be thorough and complete, and will fully convey the scope of the invention to those skilled in the art. Like numbers refer to like elements throughout.

The present invention provides mechanisms generally useful for facilitating positional adjustment of a variety of attached devices. The inventive mechanisms are particularly useful for positional adjustment of different devices associated with electronic media input and output. In one embodiment, a display device, such as a video display (e.g., a flat-screen monitor), can be attached to the inventive mechanisms. In further embodiments, input devices, such as a touchscreen, can be attached to the positional adjustment mechanisms. Further, the mechanisms are useful for attachment thereto of a support, such as for supporting a computer keyboard, a laptop computer, a personal DVD player, or other input, display, or combination device.

For simplicity, the invention may be described in terms of allowing for positional adjustment of a display device, such as a television or flat screen monitor. It is understood, however, that the invention also encompasses positional adjustment of multiple other devices that could be easily attached to the mechanisms described herein. Accordingly, any description of the mechanisms in term of positional adjustment of a display device or monitor is not intended to be limiting to specific devices but is rather intended to generally describe the ability of the mechanisms of the invention to be used with a wide variety of devices.

In one aspect, the invention is a front end height adjustment mechanism. The FEA mechanism is preferably formed for attachment at a front-facing surface to a device, such as a display device, and is formed for attachment at a back-facing surface to a support, such as a wall structural member, mounting pole, display arm, or other similar structural support. The FEA mechanism is vertically aligned and includes motion regulating components internal to the structure that allows for adjustment of the attached display device in a vertical plane (*i.e.,* height adjustment).

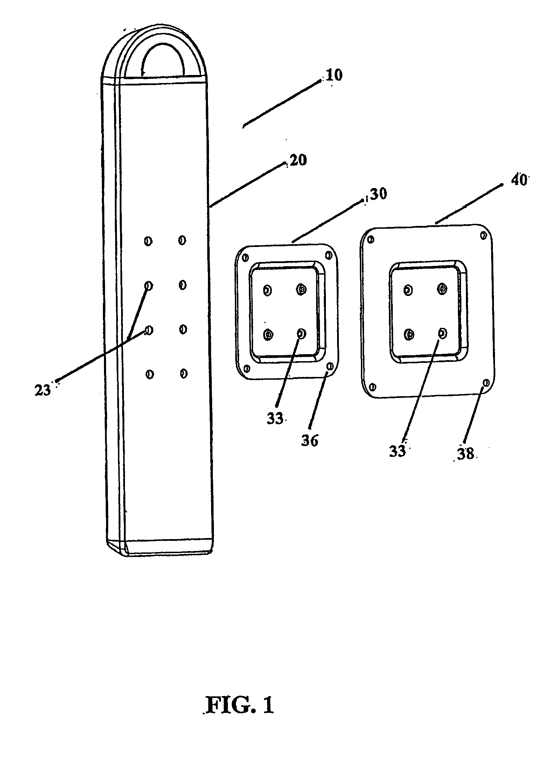

One embodiment of a front end height adjustment mechanism according to the invention is provided in Figure 1, which shows a partially exploded front perspective view of the FEA mechanism. As seen in this figure, the FEA **10** externally mainly comprises a track apparatus **20**, which further functions generally as an external functional and decorative covering for the FEA **10.** Additionally provided on the front portion of the FEA **10** are a plurality of device mounting apertures **23,** which allow for variable attachment of the desired device, such as a video display, at different vertical positions along the FEA. In the embodiment of Figure 1, eight device mounting apertures are provide, four of the eight generally being used for attachment of the display device. Accordingly, in this embodiment, three different mounting positions are provided (i.e., the top two rows of apertures, the middle two rows of apertures, or the bottom two rows of apertures).

The display device can be mounted directly to the track **20** of the FEA **10** via the device mounting apertures **23.** Alternately, the FEA can include a device mounting bracket **30,** which can be attached via the device mounting apertures **23**, again, at various positions. According to the embodiment shown in Figure 1, the mounting apertures **23** are centrally located along the length of the FEA **10**. Such positioning is intended to optimize height adjust in both the upward and downward positions; however, the invention is not limited to such positioning. The mounting apertures **23**, or further mounting apertures, could be placed higher or lower on the FEA **10** as desired to maximize either upward or downward positioning. Therefore, the mounting bracket **30** could be attached to the track apparatus **20** at any position along the length of the track apparatus 20.

Optionally, the FEA **10** can further include one or more additional mounting components for increasing the spacing between the display device and the FEA 10. In one embodiment, a spacer bracket **40** can be used. Ideally, the spacer brackets and the mounting brackets used in the invention are interchangeable such that the spacer bracket could be attached directly to the FEA and the mounting bracket attached to the spacer bracket. Further, a variety of spacer devices could be used according to the invention.

Preferentially, the mounting bracket **30** (or the spacer bracket, in appropriate embodiments) is substantially standardized such that video displays generally available on the market are readily attachable to the FEA **10**. In other words, it is preferred for the mounting bracket 30 to have a mounting hole pattern that is sized for easy mounting of a variety of input devices, display devices, and apparatuses for supporting such devices.

In a preferred embodiment according to the present invention, mounting bracket 30 (or the spacer bracket, if more external to the mechanism) is VESA^{®} compliant. The Video Electronics Standards Association (VESA^{®}) is an organization of technology based companies proposing standards for the video electronics market. One standard for mounting attachment of video displays is the VESA^{®} Flat Display Monitor Interface standard or VESA^{®}FDMI^{™}. The VESA^{®} FDMI^{™} Standard defines mounting interfaces, hole patterns, and associated cable/power supply locations for LCD monitors, plasma displays and other flat panel devices. Under this standard, VESA^{®} compliant video displays are equipped with either a 75 x 75 mm mounting hole pattern or a 100 x 100 mm mounting hole pattern. Further, VESA^{®} compliant mounting patterns may be found on other types of devices that could also be beneficially attached to the FEA mechanism of the invention for improving ergonomy related to vertical positioning of the attached device.

As seen in Figure 1, the display bracket **30** has four inner holes **33** and four outer holes **36**. The inner holes **33** are size to correspond to the device mounting apertures **23** on the FEA **10.** The outer holes **36** are according to a 75 x 75 mm mounting hole pattern. Similarly, the spacer bracket **40** has four inner holes **33** and four outer holes **38**. The outer holes **38** are according to a 100 x 100 mm mounting hole pattern. Alternately, the display bracket could have a 100 x 100 mm mounting hole pattern, and the mounting bracket could have a 75 x 75 mm mounting hole pattern, depending upon the particular need to be fulfilled by the various embodiments. Accordingly, the FEA mechanism can be customized for attachment to multiple standardized mounting protocols and can include additional adapters, such as the spacer bracket, for increasing the possible mountings. The FEA mechanism, being VESA^{®} compliant, is readily adaptable for attachment to a large number of video displays.

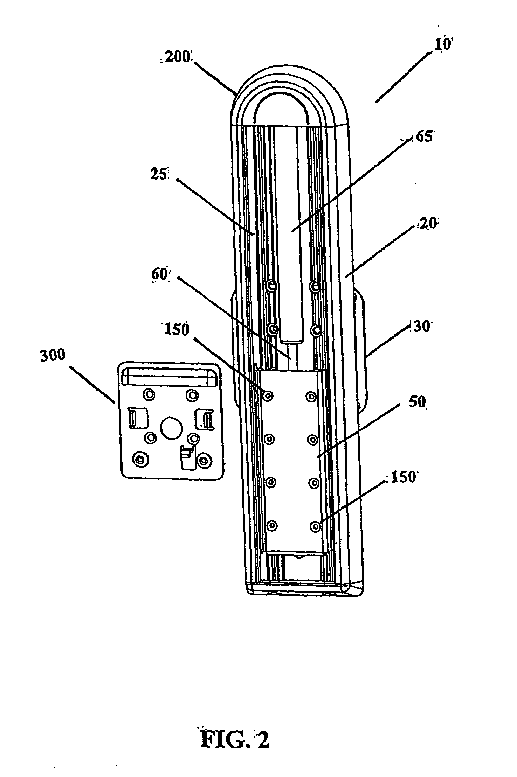

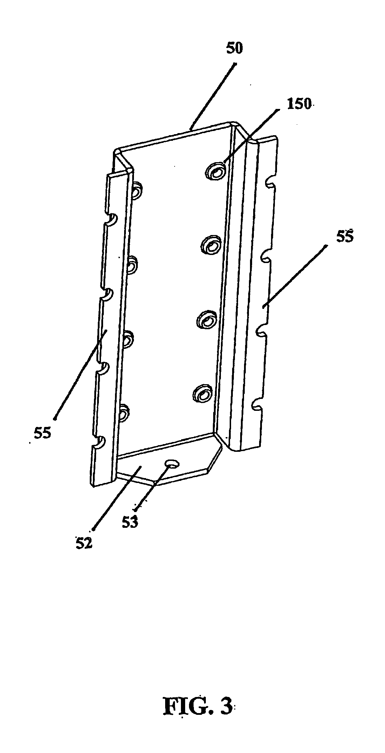

Further components of the front end height adjustment mechanism of the invention are illustrated in Figure 2, which shows a partially exploded rear perspective view of the FEA **10**. As seen in this embodiment, the track apparatus **20** has a substantially open interior for housing the further components of the FEA mechanism 10. Particularly seen in this view are the slide bracket **50** and the motion regulating device, which, in this embodiment, is a compression gas spring. The slide bracket **50** is connected to the lower end of the compression gas spring shaft **60,** such connection being capable of bearing a sufficient weight to accommodate attached devices, such as flat screen monitors. Preferably, the slide bracket **50** is attached to the compression gas spring shaft **60** via a screw, bolt, rivet, weld, or the like. In one particular embodiment, shown in Figure 3, the slide bracket **50** has a flange **52** with an aperture **53** for receiving a matching end of the compression gas spring shaft **60.** In one embodiment, the aperture **53** is threaded for receiving a threaded end of the compression gas spring shaft **60.** In another embodiment, the gas spring shaft **60** includes a pin for insertion into the aperture **53** in the slide bracket flange **52** that is held in place with a retaining clip.

Further illustrated in Figure 2 is a ball joint support mounting plate 300, which is optionally included in the FEA invention. The ball joint support mounting plate **300** is only one type of mounting plate that could be used with the FEA. Various support mounting plates could be used depending upon the support to which the FEA is to be attached. The support mounting plate can be attached directly to the sliding bracket **50,** such as by using screws, bolts, rivets, pins and clips, or the like, through interaction with sliding bracket apertures **150.** As seen in Figure 2, the sliding bracket 50 includes eight sliding bracket apertures according to this embodiment. This again allows for varying the range of height adjustment with the FEA by varying the height at which the FEA attaches to the support.

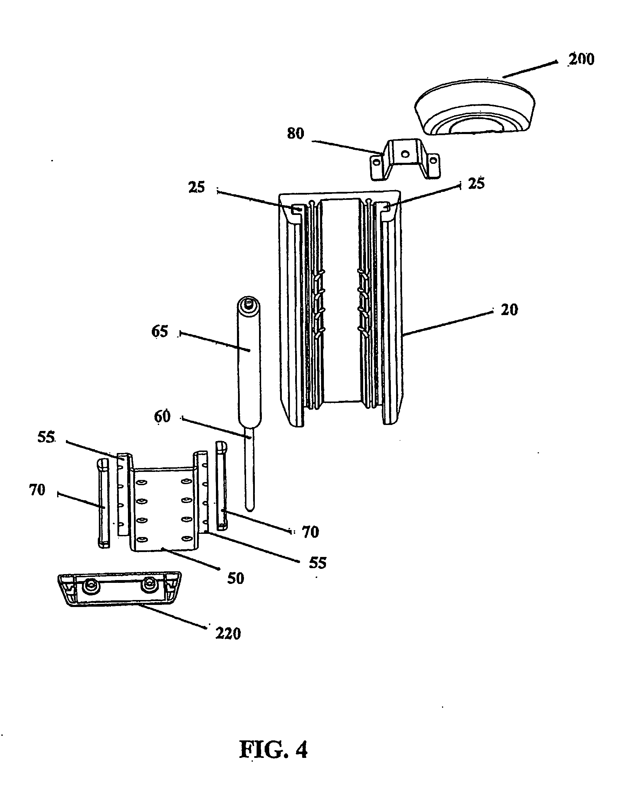

The slide bracket **50** is maintained in the track **20** through interaction with the track channels **25.** Figure 4 shows a partially exploded top perspective view of the FEA mechanism **10.** Visible in this view is the shape of the slide bracket **50,** particularly being characterized as U-shaped, and having side flanges **55** for interacting with track channels **25.** In further embodiments, the slide bracket can be characterized as being C-shaped or, alternately, as being generally flat.

The side flanges **55** fit into the track channels **25**, and the slide bracket **50** moves up and down the track **20**, with the side flanges **55** moving freely along the track channels **25**. To facilitate the free movement of the slide bracket **50** through the track **20**, the invention further encompasses the inclusion of friction reducers, such as track glides **70**, which conveniently fit over the outer edges of the side flanges **55,** acting as a buffer between the side flanges **55** and the track channels **25**. Desirably, the track glides **70** comprise a low friction material, or are coated with a low friction material, such as polytetrafluorethylene (PTFE), Teflon^{™}, polyethylene, fluorinated ethylenepropylene copolymer (FEP), perfluoroalkoxy (PFA), or the like. Other methods for facilitating the movement of the slide bracket **50** along the track channels **25** are also encompassed by the present invention. For example, the side flanges **55** could be equipped with bearings for allowing roller movement through the track channels **25.** Further friction reducing agents could also be used with the various embodiments of the invention. For example, lubricants could be used in the track channels **25** to further facilitate free movement of the slide bracket **50** up and down the track **20.**

Desirably, the slide bracket moves freely along the track channels up and down at least a partial length of the track apparatus. Such free movement provides for smoothness of operation during height adjustment; however, unfettered movement of slide bracket would not allow for positional stability at a given height. Accordingly, the front end height adjustment mechanism of the invention further comprises a motion regulating device.

In one embodiment of the invention, as shown in Figure 2, the motion regulating device is a compression gas spring, which comprises a gas spring shaft **60** and a gas spring chamber **65.** Gas springs provide controlled and smooth lifting assistance for adjusting the height of a video display. Gas springs are particularly preferred according to the present invention because they are compact and lightweight, and a single gas spring can handle weights of up to 60 lbs, which is well within the range of weights of most video displays.

The use of gas springs as the motion regulating device according to the present invention is further advantageous because various gas springs can be employed to make the FEA mechanism adaptable to a number of different devices of different weights and sizes. Various compression gas springs are available allowing the present invention to be customized based on the use of springs having different stroke lengths and different weight ratings. Accordingly, the front end height adjustment mechanism of the invention can encompass a number of embodiments wherein the FEA is particularly rated for use with devices having weights falling within a plurality of variable ranges. For example, in one embodiment, the FEA may be rated for handling devices with weights up to about 20 pounds. In another embodiment, the FEA may be rated for handling devices with weights up to about 40 pounds. Various similar embodiments having different weight ratings are also encompassed by the invention.

The front end height adjustment mechanism of the present invention is further adaptable to use in different settings, and with a variety of devices, in that the FEA mechanism can be made in a variety of lengths to provide various ranges of adjustment. When a compression gas spring is used as the movement regulating device, the overall length of the front end height adjustment mechanism can be based upon the stroke length of the gas spring. Preferably, the gas spring has a stroke length of about 2 inches to about 10 inches, more preferably about 3 inches to about 9 inches, most preferably about 4 inches to about 8 inches. In one embodiment, a compression gas spring having a stroke length of about 6 inches is used. Such a spring would generally have an overall length of about 12 inches. The front end height adjustment mechanism of the present invention is particularly advantageous due to its compact nature. Accordingly, a front end height adjustment mechanism using a compression gas spring having an overall length of about 12 inches would have a final overall length of about 12-13 inches.

Additional, similar embodiments are also encompassed by the invention. Generally, when a gas spring is used as the motion regulating device, the FEA mechanism need only be of a length approximately equal to the maximum extended length of the gas spring. In one embodiment of the invention, a decorative top cap is attached to the top portion of the track. In addition to decoration, the top cap can also function as a grip or handle for moving the FEA to adjust the height of the attached device. In another embodiment, the FEA also includes a decorative bottom cap attached to the bottom portion of the track.

The compact design of the FEA is desirable in that it is easily incorporated into a minimalistic setting that is often required in work areas employing space saving equipment, such as flat screen computer monitors. Given the compact nature of the front end height adjustment mechanism, it easily attaches to the back portion of a video display, is generally smaller in overall height than the video display to which it is attached, and allows for height adjustment without taking up valuable work space. The overall length of the front end height adjustment mechanism can be greater or smaller than the example above to accommodate movement regulating devices of different sizes. Accordingly, when the FEA mechanism has a shorter overall length, it would be expected that the range of height adjustment would be lessened, and when the FEA mechanism has a greater overall length, it would be expected that the range of height adjustment would be increased.

In part, the effectiveness of the front end height adjustment mechanism of the invention arises from its basic construction. As can be seen in Figures 2-5, in one embodiment of the invention, the FEA comprises a track **20**, a sliding bracket **50,** and a gas spring, which includes a gas spring shaft **60** and a gas spring chamber **65.** The sliding bracket **50** moves along the track channels **25**. The sliding bracket **50** is fixedly attached at a bottom flange **52** to the bottom end of the gas spring shaft **60.** The gas spring is fixedly attached to an upper portion of the track **20** via attachment of the upper end of the gas spring chamber **65** to a mounting strap **80.** The gas spring, according to this embodiment, could also be inverted.

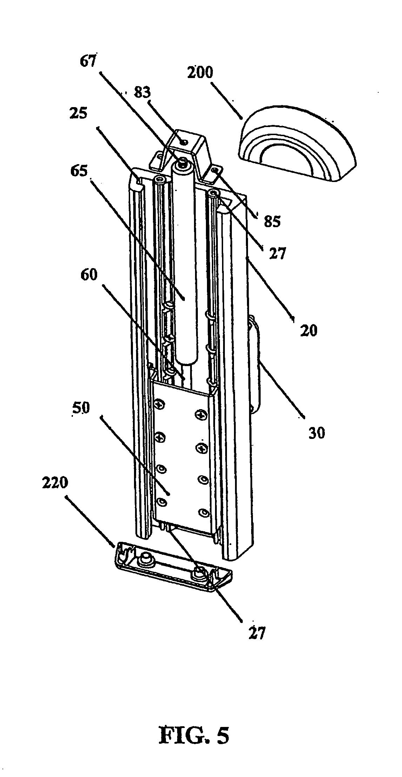

In one embodiment, as shown in Figure 5, the top portion of the gas spring chamber **65** is fixedly attached to the mounting strap **80**, such as with a pin **67** at the top surface of the gas spring chamber **65** through an aperture **83** in the mounting strap. The mounting strap **80** is further attached to an upper portion of the track **20** by commonly used attachment methods, such as bolts, pins, screws, or the like. In the embodiment shown in Figure 5, the mounting strap **80** is attached to the track **20** at apertures **27,** which run the length of the track and provide attachment points at the top and bottom ends of the track **20**. Various different methods of attaching gas spring chamber **65** to track apparatus **20** could be used and are also encompassed by the present invention.

Decorative top cap **200** attaches to the top portion of the track **20**. Such attachment can be through any conventional means. In one embodiment, the top cap **200** includes clips sized and positioned for insertion into the track channels **25**. The pins can be sized to "snap" into place, thus forming a secure attachment. Secure r attachment of the top cap can also be facilitated by forming the interior of the cap to tightly interact with the mounting strap **80**. Similarly, the bottom cap **220** is attached to the bottom of the track **20** by any conventional means. In one embodiment, the bottom cap **220** is attached to the track **20** by screws that interact with the bottom end of the apertures **27.**

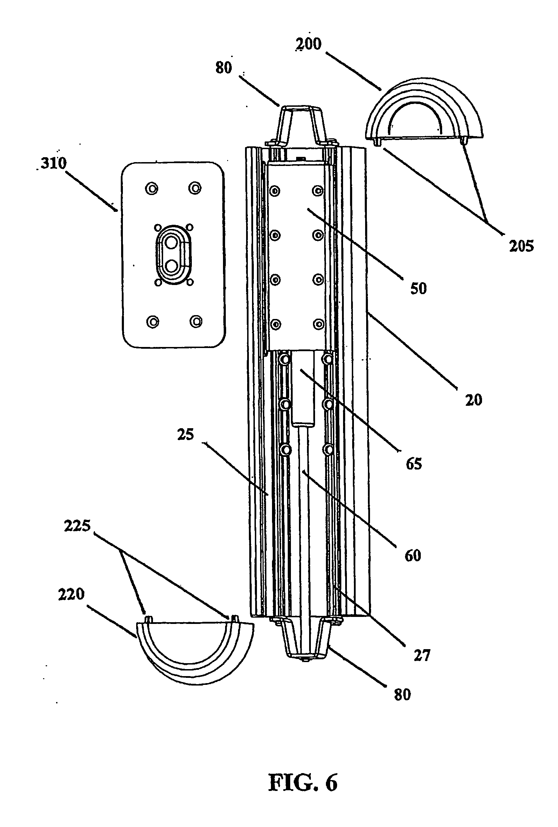

Another embodiment of the FEA of the invention is provided in Figure 6, which shows a rear perspective view of the FEA. In this embodiment of the invention, the sliding bracket **50** still moves along track channels **25** but is arranged such that the sliding bracket flange (not shown in Figure 6) is at the top of the sliding bracket **50.** The sliding bracket **50** attaches to the top portion of the gas spring chamber **65**. The bottom portion of the gas spring shaft **60** attaches to a mounting strap **80**, which in turn attaches to the track **20**. In this embodiment, the mounting strap **80** attaches to the track with screws that interact with the track apertures **27**. The gas spring according to this embodiment of the invention could also be inverted.

In the embodiment of Figure 6, a second mounting strap **80** is attached to the top portion of the track **20**, and the presence of the mounting strap 80 is beneficial for facilitating secure attachment of the top cap **200** to the track **20.** As seen in Figure 6, the top cap further includes clips **205** for interacting with the track channels **25** to additionally secure the top cap **200** to the track **25**. In this embodiment, the bottom cap **220** is similarly shaped as the top cap **200** and also includes clips **225** for facilitating attachment of the bottom cap **220** to the track 25. Again, the bottom cap **220** is preferentially structured internally to interact with the mounting strap 80 to further secure the bottom cap **220** to the track **20.**

Also illustrated in Figure 6 is a knuckle support mounting plate **310,** which is particularly designed for attachment of the FEA to a support arm having an end for receiving the protruding element of the support mounting plate **310.** As previously noted, multiple various support mounting plates can be used according to the various embodiments of the FEA of the invention.

In addition to the compression gas spring, additional motion regulating devices can be used in the front end height adjustment mechanism of the present invention. For example, the slide bracket could be attached to a simple screw mechanism that is mounted in the track apparatus such that manual adjustment of an actuator causes upward or downward movement of the attached video display. Further, the slide bracket could be allowed to move freely along the track apparatus and be externally secured in a given position with a friction generating mechanism, such as a bolt that can be manually tightened or loosened. Other methods of securing the slide bracket in a given position are also encompassed. For example, the track apparatus could have an incremental series of slots for receiving a projection from the slide bracket. Further, the gas spring could be replaced by a slide brake that includes a handle for releasing the brake temporarily to allow for upward or downward movement of the attached device.

The front end height adjustment mechanism of the invention is particularly adaptable for use in a variety of work or personal environments. As previously illustrated, the slide bracket is formed for attachment to a support device, either directly or through use of an additional support mounting bracket. Further, as previously illustrated, the FEA of the invention is formed on its front face for attachment of an input or display device, such as a video display, either directly or through the use of one or more display bracket and, optionally, a spacer bracket. Once attached to a support device and a desired input or display device, the front end height adjustment mechanism allows the user to easily adjust the height of the video display.

In some embodiments of the invention, the front end height adjustment mechanism is attached to a stationary support. For example, the FEA could be attached directly to a wall support (e.g., a stud or support beam) by attachment of the sliding bracket to the wall support. Alternately, the FEA could be attached to a stationary support pole or other stationary support member in a work environment. According to these embodiments, the FEA provides vertical positional adjustment of the desired device attached for use.

While the FEA mechanism of the invention finds particular use in a work environment, it is also useful for "at-home" and other personal environments. For example, it is particularly beneficial for home offices where space-saving and practical uses are desired. In a home computing setting, the FEA could be stationarily mounted to a wall support and a flat-screen monitor attached to the FEA. The computing desk is thereby freed from normal space consumption of the computer monitor, and the FEA allows for finger-touch height adjustment of the attached flat-screen monitor for use by various family members, including adults and children. Similarly, the FEA could be used for mounting a flat-screen television such that the television height could be adjusted with ease to suit the viewer.

The unique design of the front end height adjustment mechanism of the invention allows for both static and dynamic height adjustment. As previously noted, the front face of the FEA of the invention is formed with multiple apertures allowing for attachment of a device, such as a video display, at variable positions. Similarly, the sliding bracket is also formed with multiple apertures for attachment to a support device at variable positions. Accordingly, the FEA is capable of facilitating attachment of an input or display device to a support over a range of heights. The FEA generally provides for static height adjustment over a range of up to about 6 inches. In one particular embodiment, the FEA provides static height adjustment over a range of up to about 5 inches. Such static height adjustment is generally incremental based upon the spacing of the apertures on the front face of the track of the FEA and on the sliding bracket of the FEA.

In addition to the static height adjustment, the FEA of the invention also provides a user with dynamic height adjustment of the device attached to the FEA. As described in relation to the motion regulating device component of the FEA mechanism, dynamic height adjustment depends upon the type of motion regulating device used and the individual specifications of the motion regulating device. The FEA generally provides for dynamic height adjustment over a range of up to about 8 inches. In one particular embodiment, the FEA provides for dynamic height adjustment over a range of up to about 6 inches. Preferably, the dynamic height adjustment is continuous throughout the specified range.

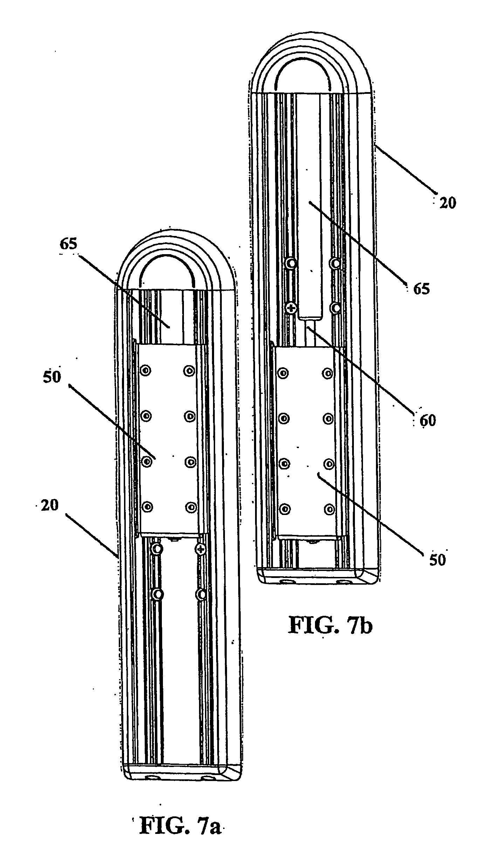

The dynamic height adjustment provided by the front end height adjustment mechanism of the invention is illustrated, in one embodiment, by Figure 7a and Figure 7b, both of which show one embodiment of the FEA incorporating a gas spring as the motion regulating device. In Figure 7a, the gas spring is retracted (only the gas spring chamber **65** being visible), and the sliding bracket **50** is in an up position, being at the top portion of the track **20**. In Figure 7b, the gas spring is extended (the gas spring shaft **60** now being visible), and the sliding bracket **50** is in the down position, being near the bottom of the track **20**. Assuming the sliding bracket is attached to a stationary support and a display device is attached to the front of the FEA, the attached display device would be in a lowered position according to Figure 7a and would be in a raised position according to Figure 7b.

According to further embodiments of the invention, the front end height adjustment mechanism can be used in association with further positional adjustment mechanisms. One such mechanism that is particularly useful in combination with the FEA is a device support arm. Device support arms (sometimes referred to as monitor arms) are useful in that they allow for positioning a display device (or an input device) some distance away from the support attachment point. This can be useful, for instance, to position the device away from obstacles, such as overhead shelving or other desktop items. Depending upon the monitor arm used, the attached device can be positioned at distances more than two feet away from the support attachment point. Furthermore, by including the FEA, the height adjustment mechanism remains directly behind the supported device, thereby providing for ease of height adjustment without requiring detachment and reattachment of any parts.

Preferentially, device support arms used according to the invention, in addition to allowing positioning away from the support attachment point, allow for lateral movement of the attached device, as well as depth adjustment. Furthermore, the monitor arms according to the invention can also allow for further vertical positioning of the attached device.

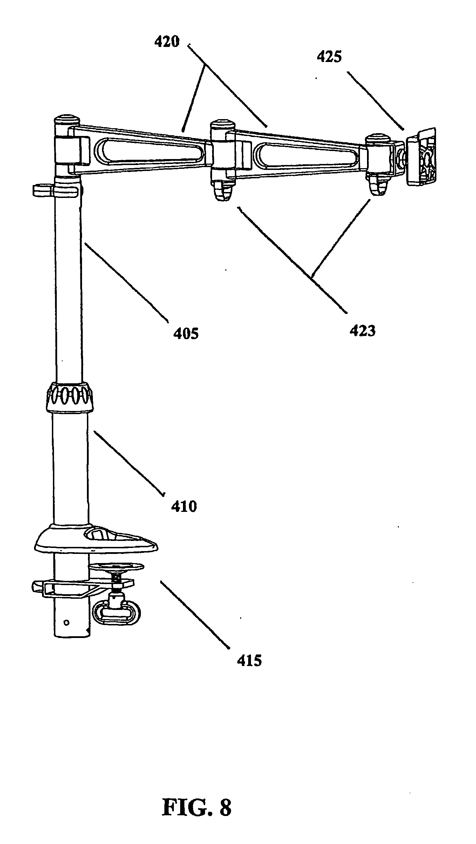

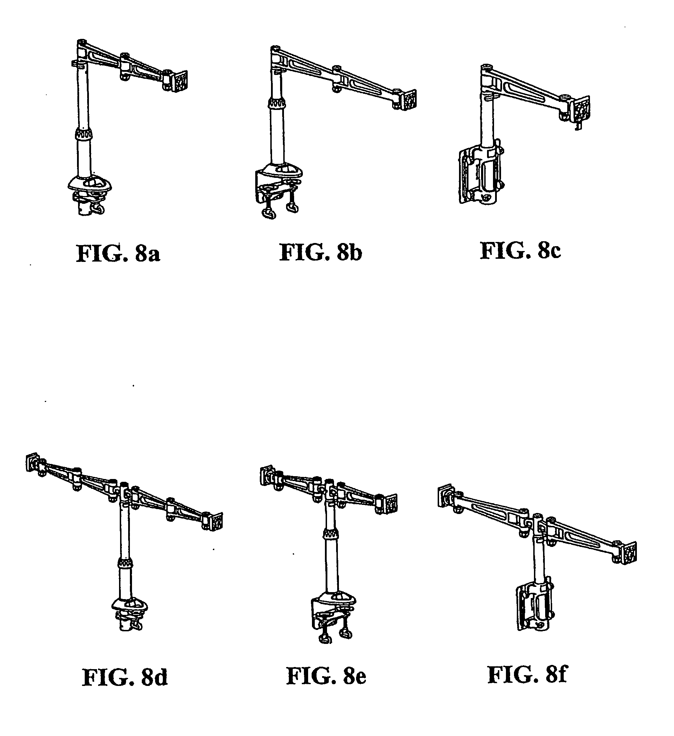

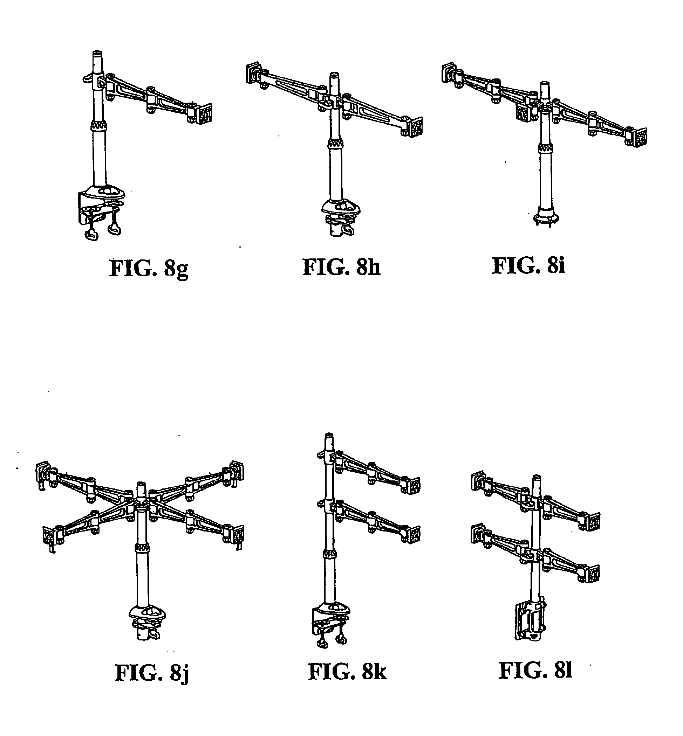

According to one embodiment of the invention, a device support arm particularly useful with the FEA is illustrated in Figure 8. The support arm in this embodiment generally comprises a post **405,** a gas cylinder **410,** a mounting piece **415,** one or more arm links **420,** and a device attachment bracket **425.** The support arm, particularly when used in combination with the FEA of the invention, provides effortless, three-dimensional adjustment to provide ideal positioning of various monitors and input devices for a number of different tasks and users. The support arm shown in Figure 8 is available from Humanscale and is manufactured under the designation M7 Flat Panel Monitor Arms.

Various alternate embodiments of the support arm shown in Figure 8 are also encompassed by the invention. In fact, the support arm is distinctive in its ability to be customized to meet a variety of device attachment needs. The support arm is thus capable of meeting a number of specific needs, including quick release, security, touchscreen attachment, rotation stop, and other special applications.

The support arm, as shown in Figure 8, is characterized by a design that blends high functionality with pleasing aesthetics. The post design of the support arm maximizes space savings by occupying less space over a work surface, such as a desk. The post **405** provides for vertical adjustment of the support arm by moving within the gas spring **410**. The gas spring allows for height adjustment with finger-touch movement, which minimizes risk of strain or other injury commonly associated with moving heavy object, such as monitors. The gas spring **410** is available in multiple options to support various monitor weights.

The length of the post **405** and the stroke of the gas spring **410** can vary such that varying distances of dynamic adjustment are available. In one particular embodiment, the post length and gas spring stroke are such that up to eight inches of dynamic height adjustment is provided. When used in combination with a FEA according to the invention, dynamic height adjustment up to about 16 inches can be provided. Such a range of dynamic adjustment allows a user to easily position an attached monitor for optimal comfort and ergonomic benefit relative the specific task being performed (e.g., leaning back, writing, or standing).

The support arm shown in Figure 8 is also customizable in the type of mounting piece **415** used with the support arm. As shown in the embodiment in Figure 8, the mounting piece **415** is a grommet style mounting piece. The various mounting options allow for quick and easy installation in any environment, such as attachment to a desk (including varying styles and thicknesses), counter, wall, or ceiling. The type of mounting piece used can affect dynamic adjustment and static adjustment of the support arm. For example, with the grommet style mounting piece, up to eight inches of dynamic height adjustment and up to six inches of static height adjustment are available in one embodiment. In another embodiment, the mounting piece is a clamp. In still another embodiment, the mounting piece is a ring bracket allowing direct attachment to a surface, such as with screws or bolts. In such embodiments, static height adjustment is generally unavailable, and dynamic height adjustment can be up to about three to four inches. In yet another embodiment, the mounting piece allows for attachment to a wall mounting surface, such as a slatwall configuration. In this embodiment, static adjustment is again unavailable, and dynamic height adjustment can be up to about three to four inches. In still another embodiment, the post and gas cylinder are absent, and the one or more arm links are attached directly to a wall through a fixed wall mount. In this embodiment, height adjustment is only available through use of the FEA mechanism of the invention.

As seen in the embodiment of Figure 8, the support arm can include one or more arm links **420**. The arm links can vary in length. Preferentially, when a plurality of arm links are used, each arm link is of the same length. In one embodiment, the arm link has a length of about eight inches. In another embodiment, the arm link has a length of about 12 inches. The combination of arm links generally allows for up to about 24 inches of depth adjustment with the support arm. The arm links are interconnected in a pivotal connection that allows the combination of arm links to partially fold up on itself. This allows for even greater positional adjustment control, particularly depth adjustment. The arm links **420** also can include one or more cable guides **423** that provide built-in cable management means to secure the power cables (as well as other cables inherent to the various electronic devices that may be used with the support arm) near the support arm to avoid cluttering the work area, to protect the cables, and to further enhance the aesthetics of the device.

The arm links are further pivotally attached to the post **405** of the support arm. The pivotal attachment can be through a top mount attachment, such as shown in Figure 8, or through a bracket mount that allows for attachment of one or more arm links **420** at varying heights along the post **405.**

The support arm of the embodiment shown in Figure 8 also further includes a device attachment bracket **425**, which is pivotally attached to the arm link **420**. As seen in Figure 8, the device attachment bracket **425** is a ball joint bracket that is a standardized 75 mm and 100 mm VESA bracket allowing for direct attachment of a monitor or input device. Other bracket types could be used to allow for attachment of even more devices. Further, the device attachment bracket **425** is useful for attachment of a FEA mechanism of the invention for facilitating even further height adjustment capability. The ball joint bracket design is particularly beneficial as it allows for up to a 60 degree range of monitor tilt (vertical or horizontal) for added adjustability. Further, the ball joint bracket allows for 360 degree monitor rotation to allow for either portrait or landscape viewing.

As previously noted, the support arm shown in Figure 8 can take on a variety of customizable configurations to accommodate a variety of users, use environments, and attached devices. Figures 8a through 8l illustrate various specific embodiments of the M7 monitor arm.

Figures 8a through 8f illustrate monitor arms wherein the arm links are attached to the pole through a top mount pivotal attachment. Figure 8a illustrates a monitor arm with one row of two standard length (eight inch) arm links and a grommet style mount device. Figure 8b illustrates a monitor arm with one row of two long (twelve inch) arm links and a clamp mount. Figure 8c illustrates a monitor arm with one long link, a slatwall mount, and a quick release tab on the ball joint bracket. Figure 8d illustrates a monitor arm with one row of two standard links on the left and two standard links on the right. The monitor arm further includes a grommet style mount device. Figure 8e illustrates a monitor arm with one row of arm links, comprising one standard arm link on the right and one standard arm link on the left. The monitor arm further includes a clamp mount. Figure 8f illustrates a monitor arm with one row of arm links comprising one long arm link on the right and one long arm link on the left. The monitor arm further comprises a slatwall mount.

Figures 8g through 8l illustrate monitor arms wherein the arm links are attached to the pole through a bracket mount pivotal attachment at some point along the length of the pole. Figure 8g illustrates a monitor arm with one row of two standard links and a clamp mount. Figure 8h illustrates a monitor arm with one row of arm links comprising one long arm link on the right and one long arm link on the left. The monitor arm further comprises a grommet style mount. Figure 8i illustrates a monitor arm with one row of arm links comprising two standard links on the right and two standard links on the left. The monitor arm further comprises a ball joint with no arm links attached to the pole and a direct mount ring bracket attachment device. Figure 8j illustrates a monitor arm with four sets of standard arm links at the same vertical position on the pole. The monitor arm further comprises a grommet mount. Figure 8k illustrates a monitor arm with two rows of two standard arm links and a clamp mount. Figure 8l illustrates a monitor arm with two rows of arm links comprising one standard arm link in each row on the right and one standard arm link in each row on the left. The monitor arm further comprises a slatwall mount.

Even further additional configurations in addition to those described above in relation to the monitor arm illustrated in Figures 8 through 8l are also encompassed by the present invention. Moreover, the present invention also encompasses other types of monitor arms for use in facilitating the positional adjustment of an attached device, such as a monitor.

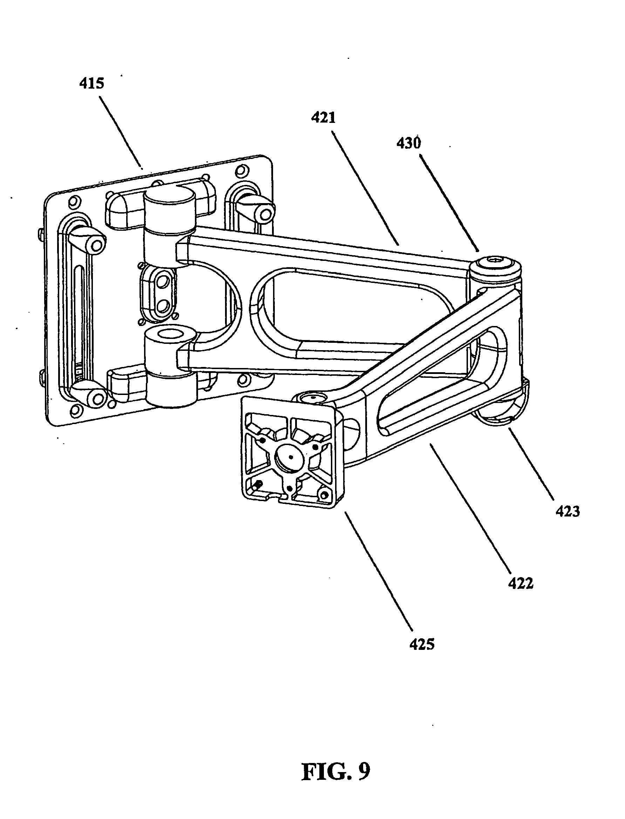

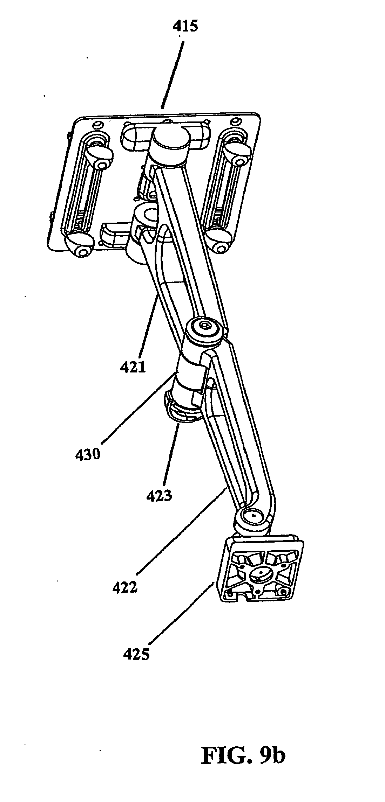

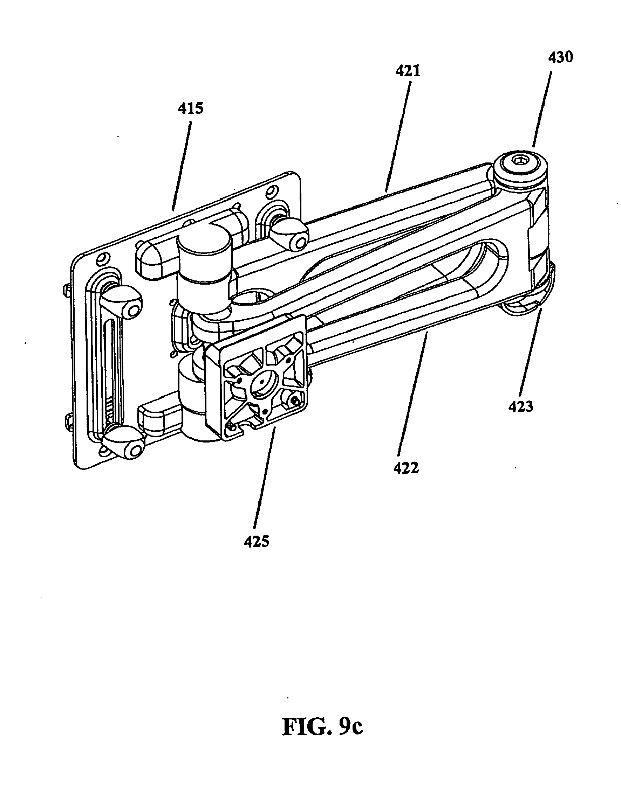

According to another embodiment of the invention, there is provided a device support arm adaptable for attachment at one end to a stationary support and adaptable for attachment at the opposite end to a device, such as a monitor or an input device. In one particular embodiment, as seen in Figure 9, the device support arm comprises a rear arm link **421**, a front arm link **422,** an offset pivot attachment **430** connecting the front arm link **422** to the rear arm link **421**, a support attachment bracket **415** pivotally connected to the rear arm link **421**, and a device attachment bracket **425** pivotally attached to the front arm link **422.**

The unique offset pivot attachment **430** used to connect the front arm link **422** and the rear arm link **421** is particularly beneficial in that it allows for folding of the device support arm from a fully extended position to a fully folded position wherein the device support arm is substantially flattened. Such movement is more clearly illustrated in Figures 9b and 9c.

The device support arm is shown fully extended in Figure 9c. In such a position, the device support arm is capable of supporting an attached device at a maximum distance away from a stationary support, to which the support attachment bracket **415** would be connected. In this position, the rear arm link **421** and the front arm link **422** are aligned in a straight line. The nature of the offset pivot attachment **430** is readily seen in Figure 9b, as the pivot attachment **430** is slightly offset from the alignment of the rear arm link **421** and the front arm link **422.**

Previously known monitor arms have pivotal attachments between arm links that are substantially aligned with the individual arm links. Such alignment disallows full collapse of the arm links. In other words, when the arm is folded (in previously known monitor arms), the arms reach a point, at some distance prior to being fully folded such that the arm links are flat together, wherein the support arm can no longer fold. Such a limitation, however, is overcome by the device support arm of the present invention.

As can be seen in Figure 9c, the design of the offset pivot attachment **430** allows the front arm link **422** to fully fold against the rear arm link **421** such that the front arm link **422** is positioned adjacent the rear arm link **421** in a substantially flattened state. This is highly beneficial in that it allows for a dramatically increased range of movement for a device attached to the device attachment bracket 425 that has heretofore not been achieved. Through use of the device support arm according to this embodiment of the invention, it is possible to allow for lateral adjustment and depth adjustment of an attached device. Accordingly, an attached device can be extended away from a stationary support the full length of the fully extended device support arm of the invention but can also be positioned out of the way, when desired, to be substantially flattened against the stationary support. This is possible due to the unique design and incorporation of the offset pivot attachment 430 in the device support arm.

The arm links themselves are characterized in this embodiment in that the rear arm link **421** is greater in length than the front arm link **422**. The arm links can vary in length; however, it is preferable that the rear link be greater in length than the front link. This further enables the device support arm to fold upon itself to a substantially flattened state.

According to another particular embodiment of the invention, the offset pivot attachment **430** includes a locking mechanism such that when fully extended, the arm links are locked to prevent unintentional folding of the arm links. Mechanisms capable of providing such a locking function are known in the art, and any of such mechanisms are fully envisioned as useful in the present invention. Particularly, the locking mechanism is internal to the offset pivot attachment and includes mechanism
wherein a lock bar is biased to engage a lock recess. The biasing mechanism, such as a spring, provides sufficient force to prevent unintentional folding of the device support arm but is minimal enough to allow the lock bar to be disengaged from the lock recess by manual folding of the arm by a user. The monitor arm in this embodiment can further comprise one or more cable guides **423** for facilitating cable management.

As shown in Figures 9 through 9c, the rear arm link **421** is pivotally attached directly to the mounting piece **415**. In this embodiment, the mounting piece **415** is a slatwall mount. In further embodiments, the rear link **421** can be pivotally attached to additional mounting arm components to allow for even more positional adjustment of an attached device. For example, in one embodiment, the rear link **421** is pivotally attached to a pole, such as the post **405** illustrated in Figure 8. Such attachment could be through a top mount pivotal attachment (similar to that illustrated in Figures 8a through 8f. Furthermore, such attachment could be through a bracket mount pivotal attachment (similar to that illustrated in Figures 8g through 8l). Still further, such attachment of the device support arm to a post could be through other means, as described herein.

When the rear arm link is attached to a post, the post can be mounted directly to a support, such as through a slatwall mount or a ring mounting bracket. Furthermore, the mounting arm can include a gas spring component to allow for even greater control of the positional adjustment and to provide dynamic height adjustment capabilities. When a gas spring is used, mounting of the device support arm can be through various mounting pieces, similar to those illustrated in Figures 8a through 8l.

In one particular embodiment, the rear arm link **421** and the front arm link **422** illustrated in Figure 9 are incorporated into the monitor arm illustrated in Figure 8, replacing the arm links illustrated in Figure 8, or being used in addition to the arm links illustrated in Figure 8 to provide for attachment of a plurality of devices. Accordingly, the device support arm of the embodiment illustrated in Figure 9 can be described in terms similar to that described above in reference to the various embodiments of Figure 8, particularly relating to the ability to provide varying static and dynamic height adjustment, depth adjustment, lateral adjustment, rotational adjustment, and tilt adjustment.

As further shown in Figure 9, the device support arm also comprises a device attachment bracket **425**. The device attachment bracket illustrated in Figure 9 is a ball joint bracket as described above in reference to Figure 8. Again, various additional brackets could be used to facilitate attachment of a number of different devices, and such additional brackets are also encompassed by the present invention.

In a preferred embodiment, the device support arm of the embodiment shown in Figure 9 is attached to the FEA mechanism of the invention, and the monitor (or other device) is attached to the FEA. This can encompass various embodiments as the device support arm can take on various configurations as described above. Accordingly, varying levels of positional adjustment can be achieved. In particular, height adjustment is greatly facilitated (both static and dynamic), especially as provided for by the FEA of the invention.

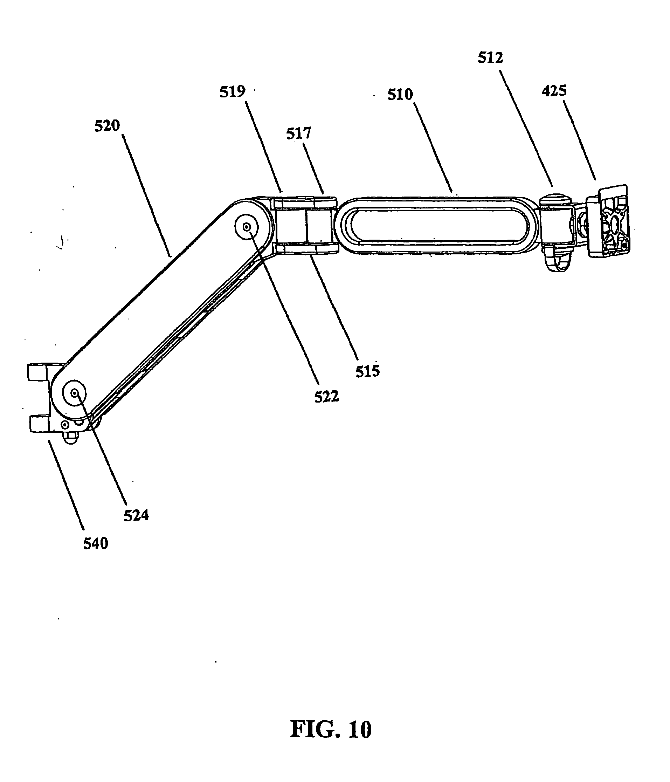

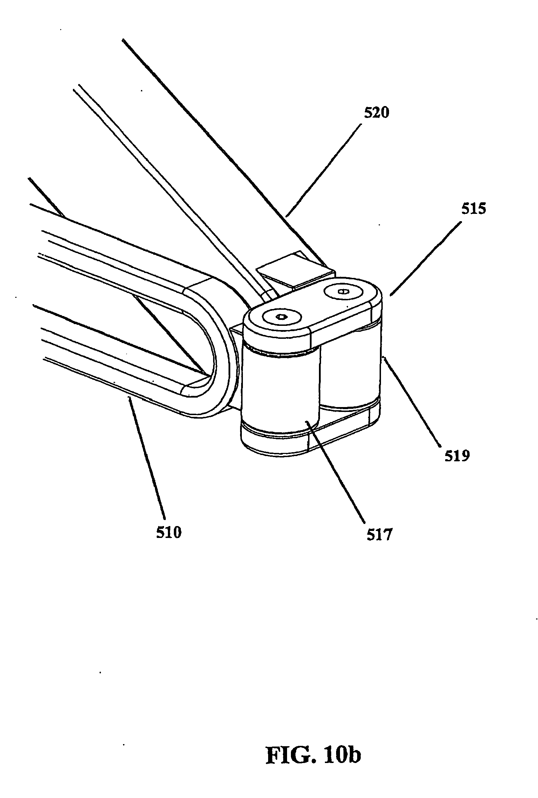

In yet another embodiment according to the present invention, there is provided a device support arm that is particularly useful for facilitating positional adjustment of an attached device. As illustrated in Figure 10, in one specific embodiment, the device support arm comprises a horizontal arm **510**, a parallelogram arm **520,** a dual pivot attachment **515** connecting the horizontal arm **510** to the parallelogram arm **520,** a device attachment bracket **425** pivotally attached to the horizontal arm **510,** and a support attachment bracket **540** pivotally attached to the parallelogram arm **520.**

The device attachment bracket **425** is pivotally attached to the horizontal arm **510** at a horizontal arm front pivot **512.** As shown in Figure 10, the device attachment bracket **425** is a ball joint type bracket with standardized VESA 75 mm and 100 mm attachment. Such attachment bracket is preferred for the versatility it provides with rotational and tilt adjustment, as well the ability to attach a large number of monitors or input devices. In particular, the device attachment bracket **425** is useful for attaching a FEA device of the present invention.

The device support arm according to this embodiment of the invention is particularly characterized in that the horizontal arm **510** is attached to the parallelogram arm **520** with the dual pivot attachment **515**. The dual pivot attachment **515** is unique in its ability to allow for rotation of the horizontal arm **510** in a horizontal plane through a range of approximately 360°. In other words, from a straight, fully extended position, the horizontal arm **510** can laterally pivot approximately 180° to the left and can laterally pivot approximately 180° to the right. Such range of motion is provided in that the dual pivot attachment **510** comprises a front horizontal pivot **517** attached to the horizontal arm **510** and a rear horizontal pivot **519** attached to the parallelogram arm **520**, both pivots being in connection as part of the dual pivot attachment **515,** and both pivots pivoting in the same plane.

The dual pivot attachment **515** is more clearly shown in Figure 10b, which provides a cut-away view of the device support arm in a folded position. As a comparative, Figure 10 shows the device support arm in an extended position. In Figure 10, the parallelogram arm **520**, the horizontal arm **510,** the rear horizontal pivot **519**, and the front horizontal pivot **517**, are aligned in the same vertical plane. In the folded position, as shown in Figure 10b, the horizontal arm **510** has pivoted 90° at the front horizontal pivot **517,** and the dual pivot attachment **515** has pivoted 90° in the same direction at the rear horizontal pivot **519.** Accordingly, the horizontal arm **510** has pivoted 180° from the extended position (Figure 10) to the folded position (Figure 10b). Identical movement to the opposite side of the device support arm of this embodiment of the invention is also possible.

The parallelogram arm **520** is attached (at its front portion), through a front parallelogram pivot bracket **522**, to the rear horizontal pivot **519**, and is further attached (at its rear portion), through a rear parallelogram pivot bracket **524**, to the support attachment bracket **540**. Various further attachments could also be used with the device support arm to allow for attachment to multiple different types of supports. In the embodiment shown, the support attachment bracket **540** is particularly adapted for attachment to a post (such as that illustrated in Figure 8). Furthermore, the support attachment bracket **540** can be attached directly to a mounting bracket (similar to the monitor arm embodiment illustrated in Figure 9). Still further, the parallelogram arm **520** could itself be directly attached to a different kind of mounting bracket for attachment to a support, such as a desk, a wall, or a modular-type support. Accordingly, the device support arm, as illustrated in the embodiment of Figure 10, can be incorporated into a variety of setups for facilitating positional adjustment of a viewing device, such as a monitor, or an input device.

Similar to the monitor arm embodiments described above, the device support arm illustrated by the embodiment of Figure 10 allows for three dimensional adjustment to provide ideal monitor positioning for different tasks and users. The device support arm can provide up to **24** inches of depth adjustment, allows for dynamic height adjustment and static height adjustment, provides 360° monitor rotation for portrait or landscape viewing, and provides a 60° range of monitor tilt.

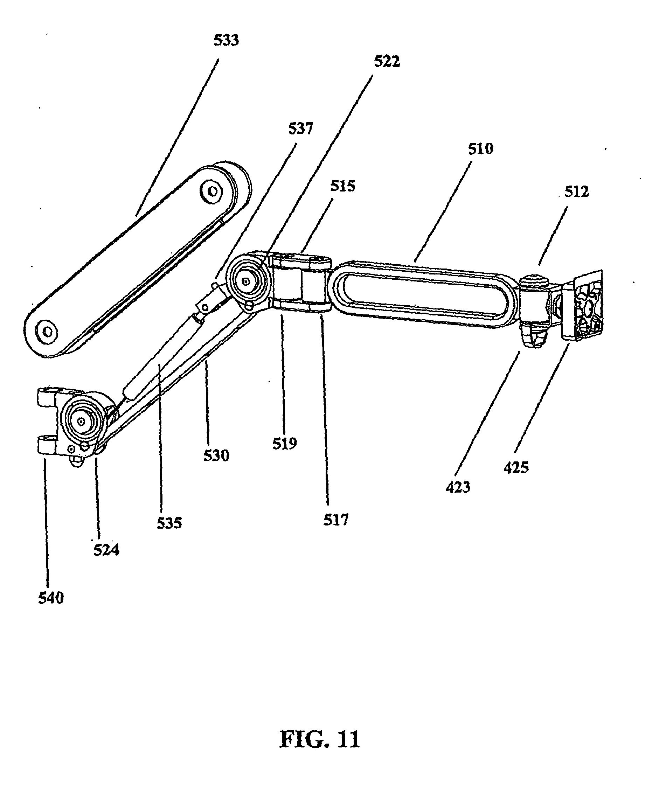

The embodiment of the device support arm of Figure 10 is further illustrated in Figure 11, which shows a partially exploded view of the parallelogram arm **520.** As seen in Figure 11, the parallelogram arm comprises a lower arm bar **530** and an upper arm bar **533** (which also functions as a casing for the parallelogram arm to cover the moving components of the parallelogram arm and to protect from interference by, or injury to, a user during dynamic height adjustment of the monitor arm). The parallelogram arm further comprises a motion-regulating device that allows for dynamic movement of the monitor arm in a vertical direction but also functions to maintain a given vertical position once dynamic adjustment by a user has stopped. In the embodiment shown in Figure 11, the motion-regulating device is a gas spring **535**. Preferably, the gas spring **535** is capable of load adjustment such that the device support arm can be easily modified to support devices over a varying range of weights. In a preferred embodiment, the gas spring **535** is adjustable to hold devices having a weight of up to about **30** pounds.

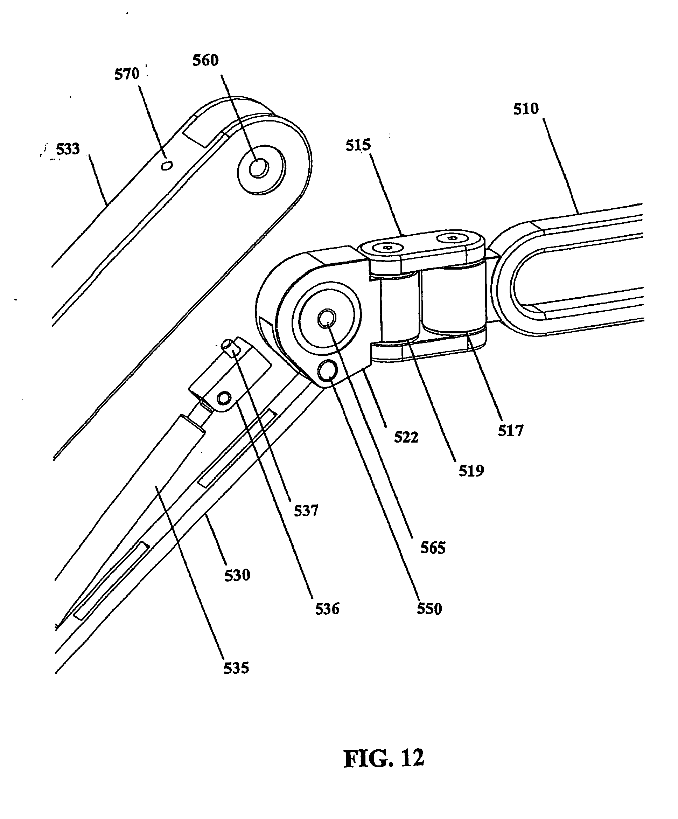

The lower arm bar **530** of the parallelogram arm is pivotally attached to the front parallelogram pivot bracket **522** and is pivotally attached to the rear parallelogram pivot bracket **524.** In one embodiment, the rear pivot bracket **524** and the support attachment bracket **540** are a single integral piece. The linkage between the horizontal arm **510**, the horizontal pivot piece **515**, the front parallelogram pivot bracket **522**, the lower arm bar **530,** and the upper arm bar **533** is shown in greater detail in Figure 12. As can be seen in this embodiment, the front parallelogram pivot **522** is attached to the rear horizontal pivot, thereby linking the horizontal arm **510** to the parallelogram arm **533.** The front parallelogram pivot bracket **522** further comprises components for facilitating pivotal attachment of the lower arm bar **530** and the upper arm bar **533.** In this embodiment, the front parallelogram pivot bracket **522** comprises an aperture **565** for receiving an attachment device, such as a screw, bolt, or pin, for attachment of the upper arm bar **533.** Accordingly, the upper arm bar **533** further comprises a pivot attachment aperture **560** through which the screw, bolt, pin, etc. can pass into the aperture 565 on the parallelogram pivot bracket **522.** Also in this embodiment, the front parallelogram pivot bracket **522** comprises an aperture for receiving an attachment device (such as a screw, bolt, or pin) to pivotally attach the lower arm bar **530** to the front parallelogram pivot bracket **522.** As shown in Figure 12, the attachment device is a pin **550.**

In Figure 12, the front end of the gas spring **535** appears for float free; however, in a fully constructed monitor arm according to this embodiment, the gas spring is actually attached to the upper arm bar **533,** thereby facilitating a parallelogram linkage between the upper arm bar **533** and the lower arm bar **530**. As can be seen in Figure 12, the gas spring **535** comprises a front gas spring bracket **536** pivotally attached to the front end of the gas spring **535.** The front gas spring bracket **536** includes a pin **537** for interacting with an aperture **570** in the top surface of the upper bar **533,** thereby attaching the gas spring **535** to the upper arm bar **533.**

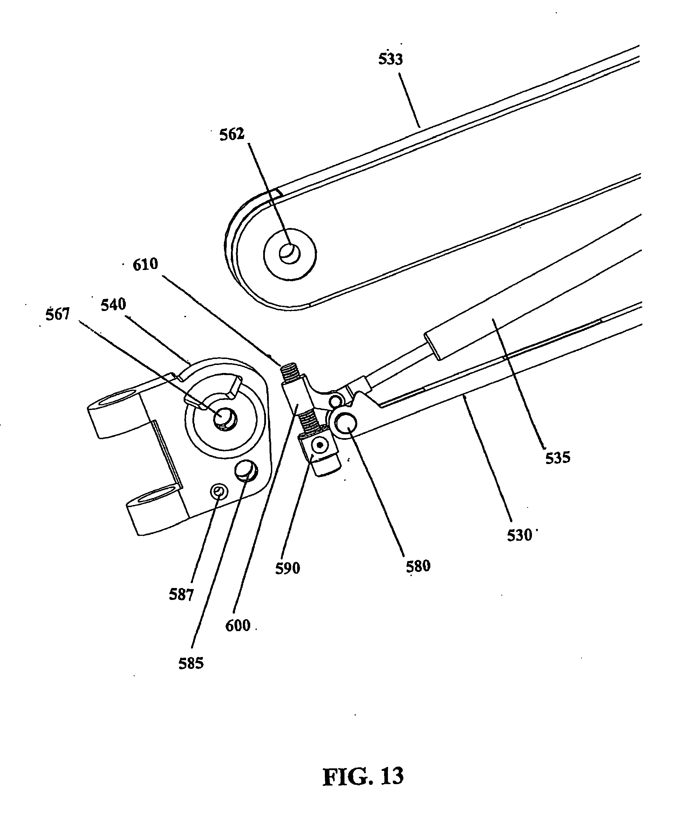

Figure 13 provides a more detailed view of the attachment of the parallelogram arm **520** to the support attachment bracket **540**, according to one embodiment of the invention. In this embodiment, the upper arm bar **533** and the support attachment **540** have been moved out of their normal position to better reveal the underlying components. Additional components seen in this view include a gas spring attachment bolt **610** and a rear gas spring bracket **600**. The gas spring **535** pivotally attaches to the rear gas spring bracket **600**, which is adjustably positioned on the attachment bolt **610.** In turn, the gas spring attachment bolt **610** is secured to the support attachment **540** with an attachment piece (such as a screw, bolt, pin, or the like) through an aperture **587** in the support attachment **540** and through an aperture in the bolt frame piece **590**.

The lower arm bar **530** likewise pivotally attaches to the support attachment **540** with an attachment piece (such as a screw, bolt, pin, or the like) through an aperture **585** in the support attachment **540** and through an aperture in the lower arm bar **530**. The upper arm bar **533** also attaches to the support attachment **540** with an attachment piece through an aperture **562** in the upper arm bar **533** and through an aperture **567** in the support attachment piece **540.** Again, such attachment facilitates a parallelogram linkage between the upper arm bar **533** and the lower arm bar **530.** Preferably, one or more spacer pieces, such as a washer, are used in the attachment of the upper arm bar 533 to the support attachment **540.** Further preferably, an aperture lining, such as a bushing, is used in the aperture **567** in the support attachment to facilitate free movement of the parallelogram arm **520** during positional adjustment of the monitor arm.

The device support arm illustrated in the embodiments of Figures 10 through 13 is particularly useful for providing dynamic height adjustment of an attached device, such as a monitor or an input device. The length of the parallelogram arm and the horizontal arm can vary and thereby provide various embodiments wherein the range of height adjustment available can also vary. In one embodiment, the parallelogram arm has a length of about 10 inches. In another embodiment, the horizontal arm has a length of about 10 inches. In one particular embodiment, both the parallelogram arm and the horizontal have a length of about 10 inches. In this embodiment, the device support arm can provide up to abut 14 inches of dynamic height adjustment. Further, depending upon the type of attachment (i.e., stationary, such as with a slatwall mount, or moveable, such as with a post and grommet mount), the device support arm in this embodiment of the invention can also provide up to about 6 inches of static height adjustment.

Preferably, the device support arm illustrated in the embodiments of Figures 10 through 13 is used in combination with the FEA mechanism of the invention. In such a combination (particularly when the device support arm further includes a post with height adjustable mount), a maximum level of position adjustment is provided to a user with a variety of devices that can be attached to the FEA. In this embodiment, height adjustment is provided with the device support arm itself, but an additional distance of height adjustment is also provided by the FEA, which is optimally position directly behind the attached device, such as a monitor. For example, static height can be adjusted to a preferably range (in both the FEA and the monitor arm) depending upon the environment in which the monitor is being used. The FEA provides dynamic height adjustment (i.e., "fine tuning" height adjustment) over a range of about 6 inches whereby preferred height for a number of users can be obtained. Further, the device support arm offers additional height adjustment over a range of about another 14 inches. In this combination, a preferred height for practically any environment and any use can be obtained with a single monitor attachment setup.

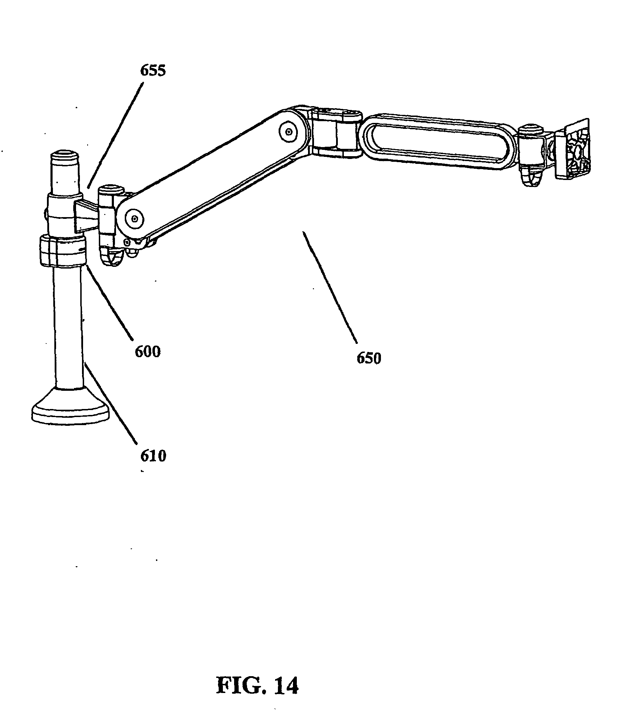

According to another aspect of the invention, there is provided a knobless bracket useful for securing a device to a support post. In particular, the bracket of the invention is useful for securing a device support arm, such as those described herein, at a specific position vertically on a support post. The bracket is particularly useful for its sleek, compact design and ease of use. The bracket is capable of securing the device support arm at a specific height (i.e., disallows the arm from sliding down the post), and the height can be readily adjusted by gripping the bracket and sliding up or down the post. Accordingly, there is no need for bulky, obtrusive bolts, screws, switches, levers, knobs, or other additional adjustment facilitating devices. Rather, the adjustment is internal to the bracket. The function of the bracket is shown in Figure 14. In the embodiment shown therein, the knobless bracket **600** is positioned on a post **610**. A device support arm **650** according to the invention is attached to the post **610** with a free sliding bracket **655**. The free sliding bracket **655** is prevented from sliding down the post by the presence of the knobless bracket **600**. Accordingly, repositioning of the device support arm **650** on the post **610** is facilitated by squeezing the bracket and manually sliding the knobless bracket **600** and the free sliding bracket **655** (and necessarily the device support arm **650**) to the desired height on the post **610.**

In one embodiment of the invention, as illustrated in Figures 15a and 15b, the bracket comprises a compressible ring-shaped cover **605** having an oblong end **606** and having a central opening **601** extending through the cover. Internal to the cover 605 is a flattened steel spring **607** that is rounded such that that the two free ends **612** of the steel spring **607** are in close proximity to each other. The steel spring **607,** while rounded, is substantially oblong shape. As visible in Figure 15a, the steel spring **607** is biased along the sides thereof toward the central opening **601** in the cover **605**. Accordingly, when the bracket **600** is on a post (e.g., a post is extending through the central opening **601** in the bracket **600,** as in Figure 14), the spring **607** presses against the post providing a gripping force directed toward the central opening **601,** and subsequently against the post.

As seen in the exploded view of Figure15b, the free ends 612 of the steel spring 607 fit into formed recesses 614 in the oblong end 606 of the cover 605. Compression of the oblong end 606 of the cover 605 provides pressure on the steel spring 607 forcing the steel spring 607 to take on a more rounded shape, therefore releasing the gripping force of the spring 607 on the post.

Preferably, the cover of the knobless bracket is comprised of a resilient material that is compressible to a degree necessary to the release the gripping force of the internal steel spring but rigid enough to resist damage. Alternately, the sides of the bracket can include sliding junction allowing the oblong end of the bracket to slide toward the opposite end of the bracket when compression is applied by a user. Other similar types of construction allowing for the function of the bracket, as described herein, are also encompassed by the invention.

As would be readily envisioned by one of skill in the art, the various mechanisms described herein are particularly useful in combination for providing functional, attractive support mechanisms that allow for easy position adjustment of attached devices. All combinations of the multiple mechanisms describe herein are therefore encompassed by the present invention.

Preferentially, the various components of the present invention, including the FEA mechanism, as well as the various device support arm embodiments, are constructed generally out of a strong, lightweight material, such as aluminum. Various different materials could also be used, such as other metals or plastics.

Many modifications and other embodiments of the inventions set forth herein will come to mind to one skilled in the art to which these inventions pertain having the benefit of the teaching presented in the foregoing descriptions and the associated drawings. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

The claims of the parent application are reproduced below on pages 33-37. These clauses define preferred embodiments. The applicant reserves the right to pursue protection for the combinations of features set out in these clauses, and/or for any other subject-matter contained in the parent application as filed, either in the present divisional application or in a further application divided from the present divisional application. The claims of the parent application are not the claims of this divisional application. The claims of the current divisional application are contained in a separate section on pages numbered 38-39 and headed "Claims".

### PREFERRED EMBODIMENTS

1. A mechanism for adjusting the height of an attached device, the mechanism comprising:
   a track;
   a sliding bracket adapted for vertical movement along the track;
   track friction reducers attached to the sliding bracket;
   a second bracket attached to the track and adaptable for mounting a device to the mechanism or attaching the mechanism to a support; and
   a compression gas spring.
2. A mechanism for adjusting the height of an attached device, the mechanism comprising:
   a track;
   a sliding bracket;
   at least one additional bracket adaptable for mounting a device to said mechanism or attaching said mechanism to a support; and
   a motion regulating device.
3. The mechanism according to claim 2, wherein the at least one additional bracket is a device mounting bracket.
4. The mechanism according to claim 3, wherein the device mounting bracket includes mounting holes conforming to a 75 mm x 75 mm mounting hole pattern.
5. The mechanism according to claim 3, wherein the device mounting bracket includes mounting holes conforming to a 100 mm x 100 mm mounting hole pattern.
6. The mechanism according to claim 2, wherein the sliding bracket is U-shaped.
7. The mechanism according to claim 2, wherein the sliding bracket is C-shaped.
8. The mechanism according to claim 2, wherein the sliding bracket is flat.
9. The mechanism according to claim 2, further comprising track friction reducers attached to the sliding bracket.
10. The mechanism according to claim 2, wherein the sliding bracket comprises a flange for attachment to the motion regulating device.
11. The mechanism according to claim 2, wherein the motion regulating device is a compression gas spring.
12. The mechanism according to claim 2, wherein the compression gas spring has a stroke length of about 2 inches to about 10 inches.
13. The mechanism according to claim 2, wherein the at least one additional bracket is a support mounting plate.
14. The mechanism according to claim 2, further comprising a monitor arm attached to the sliding bracket.
15. The mechanism According to claim 14, further comprising a post for attachment to the monitor arm.
16. A method for positionally adjusting a display or input device comprising the steps of:
   a) providing a front end height adjustment mechanism comprising:
      i) a track,
      ii) a sliding bracket;
      iii) at least one additional bracket adaptable for mounting a device to the mechanism or attaching the mechanism to a support; and
      iv) a motion regulating device;
   b) attaching the front end height adjustment mechanism to a support;
   c) attaching a display or input device to the front end height adjustment mechanism; and
   d) manually adjusting the position of said display or input device.
17. The method according to claim 16, wherein step c is performed prior to step b.
18. The method according to claim 16, wherein the support includes a monitor arm.
19. The method according to claim 18, wherein the support further includes a post.
20. The method according to claim 16, wherein said step of manually adjusting the position of the display or input device includes static height adjustment of the display or input device.
21. The method according to claim 16, wherein said step of manually adjusting the position of the display or input device includes dynamic height adjustment of the display or input device.
22. A device support arm comprising:
   a) a horizontal arm;
   b) a parallelogram arm;
   c) a dual pivot attachment connecting the horizontal arm to the parallelogram arm;
   c) a device attachment bracket; and
   d) a support attachment bracket;
   wherein the dual pivot attachment includes a front pivot and a rear pivot, both pivots pivoting in the same plane.
23. The device support arm according to claim 22, wherein the dual pivot attachment allows for 180° lateral movement of the horizontal arm to either side of the support arm.
24. The device support arm according to claim 22, wherein the support arm is capable of folding at the dual pivot attachment such that the horizontal arm is positioned adjacent the parallelogram arm.
25. The device support arm according to claim 22, wherein the device attachment bracket includes a plurality of standardized holes for attachment of a device.
26. The device support arm according to claim 22, wherein the support attachment bracket is adapted for attachment to a post.
27. The device support arm according to claim 16, wherein the parallelogram arm includes a motion regulating device.
28. The device support arm according to claim 27, wherein the motion regulating device is a gas spring.
29. A device support arm comprising:
   a) a front arm link;
   b) a rear arm;
   c) an offset pivot attachment connecting the front arm link to the rear arm link;
   c) a device attachment bracket; and
   d) a support attachment bracket;
   wherein the rear arm link is greater in length that the front arm link.
30. The device support arm according to claim 29, wherein the support arm is capable of folding at the offset pivot attachment such that the front arm link is positioned adjacent the rear arm link.
31. The device support arm according to claim 29, wherein the device attachment bracket includes a plurality of standardized holes for attachment of a device.
32. The device support arm according to claim 29, wherein the support attachment bracket is adapted for attachment to a post.
33. The device support arm according to claim 29, wherein the offset pivot attachment includes a mechanism for locking the support arm into an extended position.
34. A bracket for adjustably maintaining a device support arm at a given position on a post, the bracket comprising:
   a compressible ring-shaped cover having a central opening therethrough; and
   a spring component contained within the ring-shaped cover;
   wherein the spring provides a gripping force toward the central opening in the ring shaped cover, and wherein compression of the ring-shaped cover releases the gripping force of the spring.
35. A post for supporting a device support arm, wherein the post includes a bracket according to claim 34.

## Claims

1. A device support arm comprising:
a. a horizontal arm (510);
b. a parallelogram arm (520) comprising:
i. a lower arm bar (530),
ii. an upper arm bar (533) comprising an upper surface and two opposing side surfaces,
iii. a front parallelogram pivot bracket (522),
iv. a rear parallelogram pivot bracket (524), and
v. a gas spring (535) attached at one end to the lower arm bar and attached at the other end to the upper surface of the upper arm bar;
c. a dual pivot attachment (515) connecting the horizontal arm (510) to the parallelogram arm (520), said dual pivot attachment (510) comprising a front pivot (517) and a rear pivot (519), both pivots pivoting in the same plane;
d. a device attachment bracket (425) attached to the horizontal arm (510); and
e. a support attachment bracket (540) attached to the parallelogram arm (520).

2. The device support arm according to claim 1, wherein the dual pivot attachment (510) allows for 180° lateral movement of the horizontal arm (510) to either side of the device support arm.

3. The device support arm according to claim 1, wherein the device support arm is capable of folding at the dual pivot attachment (510) such that the horizontal arm (510) is positioned adjacent the parallelogram arm (520).

4. The device support arm according to claim 1, wherein the device attachment bracket (425) includes a plurality of standardized holes for attachment of a device.

5. The device support arm according to claim 1, wherein the support attachment bracket (540) is adapted for attachment to a post (610).

6. The device support arm according to claim 1, wherein the support attachment bracket (540) is integral with the rear parallelogram pivot bracket (524).

7. The device support arm according to claim 1, wherein the gas spring (535) is attached to the upper arm bar (533) by a pin (537) on the gas spring (535) interacting with an aperture (570) in the upper surface of the upper arm bar (533).
